(19) Europäisches Patentamt
European Patent Office
Office européen des brevets

(11) **EP 3 498 370 B1**

(12) **FASCICULE DE BREVET EUROPEEN**

(45) Date de publication et mention
de la délivrance du brevet:
**04.08.2021 Bulletin 2021/31**

(21) Numéro de dépôt: **18209659.4**

(22) Date de dépôt: **30.11.2018**

(51) Int Cl.:
*B01J 23/75* (2006.01)  *B01J 23/755* (2006.01)
*B01J 23/88* (2006.01)  *B01J 23/888* (2006.01)
*B01J 21/04* (2006.01)  *C10G 45/08* (2006.01)
*B01J 37/20* (2006.01)  *B01J 37/28* (2006.01)
*B01J 37/00* (2006.01)  *B01J 37/02* (2006.01)
*B01J 37/08* (2006.01)  *B01J 23/882* (2006.01)
*B01J 27/185* (2006.01)  *B01J 35/10* (2006.01)

(54) **CATALYSEUR D'HYDRODESULFURATION SELECTIVE DES ESSENCES DE FCC**

**KATALYSATOR ZUR SELEKTIVEN WASSERSTOFFENTSCHWEFELUNG VON FCC-BENZINEN**

**CATALYST FOR SELECTIVE FCC GASOLINE HYDRODESULPHURISATION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2017 FR 1762158**

(43) Date de publication de la demande:
**19.06.2019 Bulletin 2019/25**

(73) Titulaire: **IFP Energies nouvelles**
**92852 Rueil-Malmaison Cedex (FR)**

(72) Inventeurs:
• **GIRARD, Etienne**
**1 & 4 avenue du Bois-Préau**
**92852 RUEIL-MALMAISON CEDEX (FR)**
• **LEFLAIVE, Philibert**
**69780 MIONS (FR)**
• **VALLEE, Christophe**
**1 & 4 avenue du Bois-Préau**
**92852 RUEIL-MALMAISON CEDEX (FR)**
• **CLEMENCON, Isabelle**
**69510 THURINS (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 2 816 094     US-A- 4 490 480
US-A- 4 686 030      US-A- 5 300 217
US-A- 5 906 731      US-A1- 2015 321 177

Remarques:
Le dossier contient des informations techniques présentées postérieurement au dépôt de la demande et ne figurant pas dans le présent fascicule.

**Description**

La présente invention concerne un catalyseur d'hydrotraitement et un procédé de préparation dudit catalyseur utile pour l'hydrodésulfuration d'une coupe pétrolière, en particulier une coupe essence.

L'invention se rapporte également à un procédé d'hydrodésulfuration d'une coupe essence mettant en œuvre un catalyseur selon l'invention.

**Etat de la technique**

Le raffinage pétrolier ainsi que la pétrochimie sont maintenant soumis à de nouvelles contraintes. En effet, tous les pays adoptent progressivement des spécifications sévères en soufre, l'objectif étant d'atteindre par exemple 10 ppm (poids) de soufre dans les essences commerciales en Europe et au Japon. Le problème de réduction des teneurs en soufre se concentre essentiellement sur les essences obtenues par craquage, qu'il soit catalytique (FCC Fluid Catalytic Cracking selon la terminologie anglo-saxonne) ou non catalytique (cokéfaction, viscoréduction, vapocraquage), principaux précurseurs de soufre dans les pools essence.

Une solution, bien connue de l'homme du métier, pour réduire la teneur en soufre consiste à effectuer un hydrotraitement (ou hydrodésulfuration) des coupes hydrocarbonées (et notamment des essences de craquage catalytique) en présence d'hydrogène et d'un catalyseur hétérogène. Cependant ce procédé présente l'inconvénient majeur d'entrainer une chute très importante de l'indice d'octane si le catalyseur mis en œuvre n'est pas assez sélectif. Cette diminution de l'indice d'octane est notamment liée à l'hydrogénation des oléfines présentes dans ce type d'essence de manière concomitante à l'hydrodésulfuration.

Contrairement à d'autres procédés d'hydrotraitement, l'hydrodésulfuration des essences doit donc permettre de répondre à une double contrainte antagoniste : assurer une hydrodésulfuration profonde des essences et limiter l'hydrogénation des composés insaturés présents.

Une voie pour répondre à cette double problématique consiste à employer des catalyseurs d'hydrodésulfuration à la fois actifs en hydrodésulfuration mais également très sélectifs en hydrodésulfuration par rapport à la réaction d'hydrogénation des oléfines.

Ainsi on connait dans l'état de la technique le document US 2009/321320 qui divulgue des catalyseurs d'hydrodésulfuration qui comprennent une phase métallique active au cobalt/molybdène et un support à base d'alumine haute température (c'est-à-dire calcinée à une température supérieure à 800°C) et contenant moins de 50 % poids en alumine gamma, eta et chi, et de surface spécifique comprise entre 40 et 200 $m^2$/g. Les catalyseurs sont obtenus par imprégnation à sec d'une solution aqueuse contenant du cobalt, du molybdène et au moins un additif sous forme d'un composé organique.

Le document EP 1892039 décrit des catalyseurs d'hydrodésulfuration sélectifs comprenant au moins un support, au moins un élément du groupe VIII, au moins un élément du groupe VIB et du phosphore dans lequel le support peut être essentiellement constitué par au moins une alumine de transition, c'est-à-dire qu'il comprend au moins 51 % poids d'alumine de transition, ledit support pouvant avoir une surface spécifique inférieure à 135 $m^2$/g. La phase cristallographique exacte de l'alumine de transition n'est pas divulguée. Ce document divulgue également que la densité en éléments du groupe VIB par unité de surface du support est comprise entre $2.10^{-4}$ et $18.10^{-4}$ g d'oxydes d'éléments du groupe VIB par $m^2$ de support.

Le document WO2009/111720 divulgue des catalyseurs d'hydrodésulfuration sélectifs ayant une surface spécifique inférieure à 100 $m^2$/g et un diamètre moyen des pores supérieur à 200 Å, le catalyseur comprenant du cobalt, du molybdène, du phosphore et un support d'alumine principalement sous la forme de thêta-alumine et de delta-alumine.

Enfin, le document FR3023184 divulgue des catalyseurs d'hydrodésulfuration sélectifs séchés comprenant un support à base d'alumine, au moins un métal du groupe VIB, au moins un métal du groupe VIII et du phosphore et dans lequel la surface spécifique du catalyseur est comprise entre 20 et 150 $m^2$/g et la densité en métal du groupe VIB, exprimée en nombre d'atomes de métal du groupe VIB par unité de surface du catalyseur est comprise entre 7 et 30 atomes de métal du groupe VIB par $nm^2$ de catalyseur. De préférence, l'alumine est une alumine delta, gamma ou thêta, seule ou en mélange. La surface spécifique du support d'alumine est généralement comprise entre 20 $m^2$/g et 200 $m^2$/g.

Le document EP 2 816 094 A1 décrit un procédé de production d'essence à basse teneur en soufre et en mercaptans. Selon un mode de réalisation, le catalyseur utilisé dans une des étapes d'hydrodésulfuration (revendication 1: étape c)) comprend un support constitué d'alumine gamma ou delta de surface spécifique comprise entre 70 $m^2$/g et 350 $m^2$/g, une teneur en poids d'oxyde du métal du groupe VIB comprise entre 1% et 30% poids par rapport au poids total du catalyseur, une teneur en poids d'oxyde du métal du groupe VIII comprise entre 1% et 30% poids par rapport au poids total du catalyseur, un taux de sulfuration des métaux constituants ledit catalyseur au moins égal à 60%, et un rapport molaire entre le métal du groupe VIII et le métal du groupe VIB compris entre 0,6 et 3 mol/ mol.

Le document US 5 300 217 A décrit des catalyseurs supportés pouvant être utilisés dans des procédés d'hydrotraitement de charges hydrocarbonées, en particulier pour l'hydrodésulfuration. Différents supports sont possibles, les supports préférés étant des mélanges d'alumines gamma et delta.

On connaît également des catalyseurs d'hydrotraitement de gazole comprenant un support, au moins un métal du groupe VIB associé à au moins un métal du groupe VIII qui présentent une surface spécifique comprise entre 200 et 300 m²/g et donc une densité en métal du groupe VIB par unité de surface, exprimée en nombre d'atomes de métal du groupe VIB par nm² de catalyseur, inférieure à 7. Le support utilisé dans les catalyseurs d'hydrotraitement de gazole est généralement une alumine gamma ayant une surface spécifique supérieure à 200 m²/g.

Il existe donc encore aujourd'hui un vif intérêt chez les raffineurs pour des catalyseurs d'hydrodésulfuration notamment de coupes essences qui présentent des performances catalytiques améliorées, notamment en termes d'activité catalytique en hydrodésulfuration et/ou de sélectivité et qui ainsi une fois mis en œuvre permettent de produire une essence à basse teneur en soufre sans réduction sévère de l'indice d'octane.

**Résumé de l'invention**

L'invention concerne donc un catalyseur d'hydrotraitement comprenant au moins un métal du groupe VIB, au moins un métal du groupe VIII et un support d'alumine contenant de l'alumine gamma et une alumine choisie parmi l'alumine delta, thêta et/ou alpha, ledit support d'alumine ayant une teneur en alumine gamma comprise entre 60% et 95% poids par rapport au poids du support, ledit support ayant une surface spécifique comprise entre 60 et 100 m²/g, la teneur en métal du groupe VIB est comprise entre 3 et 35% poids d'oxyde dudit métal du groupe VIB par rapport au poids total du catalyseur et la teneur en métal du groupe VIII est comprise entre 0,1 et 10% poids d'oxyde dudit métal du groupe VIII par rapport au poids total du catalyseur, ledit catalyseur ayant une surface spécifique comprise entre 50 et 90m²/g.

Selon une variante, le rapport molaire (métal du groupe VIII)/(métal du groupe VIB) est compris entre 0,1 et 0,8.

Selon une variante, le catalyseur contient en outre du phosphore, la teneur en phosphore étant comprise entre 0,3 et 10% poids exprimé en $P_2O_5$ par rapport au poids total du catalyseur et le rapport molaire phosphore/(métal du groupe VIB) dans le catalyseur est compris entre 0,1 et 0,7.

Selon une variante, la densité en métal du groupe VIB, exprimée en nombre d'atomes de métal du groupe VIB par unité de surface du catalyseur est comprise entre 3 et 30 atomes de métal du groupe VIB par nm² de catalyseur.

Selon une variante, le métal du groupe VIB est choisi parmi le tungstène et le molybdène et le métal du groupe VIII est choisi parmi le nickel et le cobalt.

Selon une variante, le support d'alumine est obtenu par traitement thermique à une température inférieure ou égale à 770°C d'un précurseur d'alumine.

Selon une variante, le catalyseur comprend en outre au moins un composé organique contenant de l'oxygène et/ou de l'azote.

Selon cette variante, le composé organique est choisi parmi un acide carboxylique, un alcool, un aldéhyde, un ester, une amine, un acide carboxylique aminé, un alcool aminé, un nitrile et un amide.

Selon cette variante, le composé organique est choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide γ-cétovalérique, le diméthylformamide, la N-méthylpyrrolidone, le carbonate de propylène, le 3-oxobutanoate de 2-méthoxyéthyle, le 3-oxobutanoate de 2-méthacryloyloxyéthyle, la bicine, ou la tricine.

Selon une variante, le catalyseur est sulfuré.

L'invention concerne également un procédé de préparation du catalyseur d'hydrotraitement selon l'invention comprenant les étapes suivantes :

a) on effectue un traitement thermique à une température inférieure ou égale à 770°C d'un précurseur d'alumine de façon à obtenir un support comportant une teneur en alumine gamma comprise entre 60% et 95% poids par rapport au poids du support, ledit support ayant une surface spécifique comprise entre 60 et 100 m²/ g,

b) on met en contact au moins un composant d'un métal du groupe VIB, au moins un composant d'un métal du groupe VIII, et optionnellement du phosphore avec ledit support, de manière à obtenir un précurseur de catalyseur,

c) on sèche ledit précurseur de catalyseur issu de l'étape b) à une température inférieure à 200°C.

Selon une variante, l'étape a) de traitement thermique est effectuée à partir d'un précurseur d'alumine contenant au moins 50% poids de boehmite AlOOH par rapport au poids total du précurseur d'alumine.

Selon une variante, le procédé de préparation comprend en outre une étape de calcination d) à une température comprise entre 200°C et 600°C effectuée après l'étape c).

Selon une variante, le procédé de préparation comprend en outre une étape de sulfuration effectuée après l'étape c) ou d).

Enfin l'invention a également pour objet un procédé d'hydrodésulfuration d'une coupe essence dans lequel on met en contact ladite coupe essence, de l'hydrogène et un catalyseur selon l'invention qui a été sulfuré. La mise en contact est effectuée à :

- une température comprise entre 200 et 400°C;
- une pression totale comprise entre 1 et 3 MPa;
- une Vitesse Volumique Horaire, définie comme étant le débit volumique de charge rapporté au volume de catalyseur, comprise entre 1 et 10 $h^{-1}$,
- un rapport volumique hydrogène/charge essence compris entre 100 et 600 Nl/l.

L'essence qui est traité par le procédé d'hydrodésulfuration est de préférence une essence issue d'une unité de craquage catalytique.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

**Description détaillée de l'invention**

**Catalyseur**

La demanderesse a ainsi découvert qu'un catalyseur d'hydrotraitement comprenant au moins un métal du groupe VIB, au moins un métal du groupe VIII et un support d'alumine ayant une teneur en alumine gamma comprise entre 60% et 95% poids par rapport au poids du support, ledit support ayant une surface spécifique comprise entre 60 et 100 $m^2$/g présente après sulfuration non seulement une activité maintenue en hydrodésulfuration mais également une forte augmentation de la sélectivité en hydrodésulfuration par rapport à la réaction d'hydrogénation des oléfines.

De manière surprenante, la demanderesse a établi qu'un catalyseur répondant aux caractéristiques mentionnées ci-dessus et comportant notamment un support d'alumine ayant une teneur en alumine gamma comprise entre 60% et 95% poids par rapport au poids du support tout en ayant une surface spécifique inhabituellement basse pour un support comportant majoritairement de l'alumine gamma présente une forte activité en hydrodésulfuration tout en étant plus sélectif vis-à-vis de la réaction d'hydrogénation des oléfines. En effet, la majorité des catalyseurs utilisés dans l'hydrotraitement de coupes essences divulguent des supports d'alumine ayant une surface spécifique comparable à celle de l'invention, mais ayant une phase cristallographique majoritairement d'alumine thêta, delta, kappa, et/ou alpha. A contrario, les catalyseurs à base d'alumine gamma connus de l'art antérieur et souvent utilisés pour l'hydrotraitement d'une coupe gazole montrent généralement des surfaces spécifiques plus élevées.

Le catalyseur selon l'invention démontre une sélectivité en hydrodésulfuration par rapport à l'hydrogénation des oléfines qui est améliorée lui conférant ainsi une propriété avantageuse dans le cadre de l'hydrotraitement de coupes d'hydrocarbures du type essence (c'est-à-dire ayant une température d'ébullition généralement comprise entre 30°C et 250°C) contenant des oléfines où l'on recherche à minimiser la réaction d'hydrogénation des oléfines afin de limiter la perte d'indice d'octane de l'essence traitée.

Selon un premier aspect de l'invention, le catalyseur selon l'invention est composé d'un support d'alumine particulier et d'une phase active formée d'au moins un métal du groupe VIB et d'au moins un métal du groupe VIII et optionnellement du phosphore.

La composition de l'alumine en phase cristallographique gamma est déterminée par analyse DRX sur poudre du support.

Le terme « alumine de transition » recouvre un ensemble d'états cristallographiques qui dépendent du précurseur et du traitement thermique appliqué lors de la fabrication de l'alumine (voir notamment l'article de P. Souza Santos et al. « Standard Transition Aluminas. Electron Microscopy Studies », Materials Research, Vol. 3, No. 4, 104-114, 2000). Ces états cristallographiques sont caractérisés par différents paramètres, dont le système cristallographique (cubique, quadratique, monoclinique) et les paramètres de maille du solide. Trois types définis d'alumine de transition utilisées comme supports de catalyseur, correspondant à trois systèmes cristallographiques différents peuvent être obtenus à partir de boehmite : gamma, delta et thêta. Les domaines d'existence de ces alumines sont fonction du type de boehmite utilisé et du traitement thermique appliqué. En réalité, les alumines obtenues sont souvent des mélanges de deux ou plusieurs types.

L'alumine obtenue à basse température (inférieure à 550°C) est dite « gamma cubique ». Les raies caractéristiques de ce type d'alumine, dont le facteur de structure dépend essentiellement des positions atomiques bien définies de l'oxygène dans le réseau de l'alumine gamma cubique, comme les raies [400] et [440], sont relativement étroites, symétriques et leur largeur est reliée majoritairement à la taille des cristallites. Dans les faits, cette alumine n'a qu'un domaine d'existence réduit et se décline en un continuum de solides plus ou moins quadratiques allant jusqu'à la formation d'alumine delta.

Un traitement thermique à plus haute température des alumines gamma et delta permet la transition vers l'alumine theta puis vers la phase finale alpha thermodynamiquement stable.

Afin d'extraire les informations contenues dans le diagramme de diffraction des alumines de transition sur leur nature, leur degré d'évolution, la taille de leurs cristallites, la demanderesse a défini un protocole de traitement du profil diffracté aussi robuste que possible. Ce traitement est décrit ci-dessous.

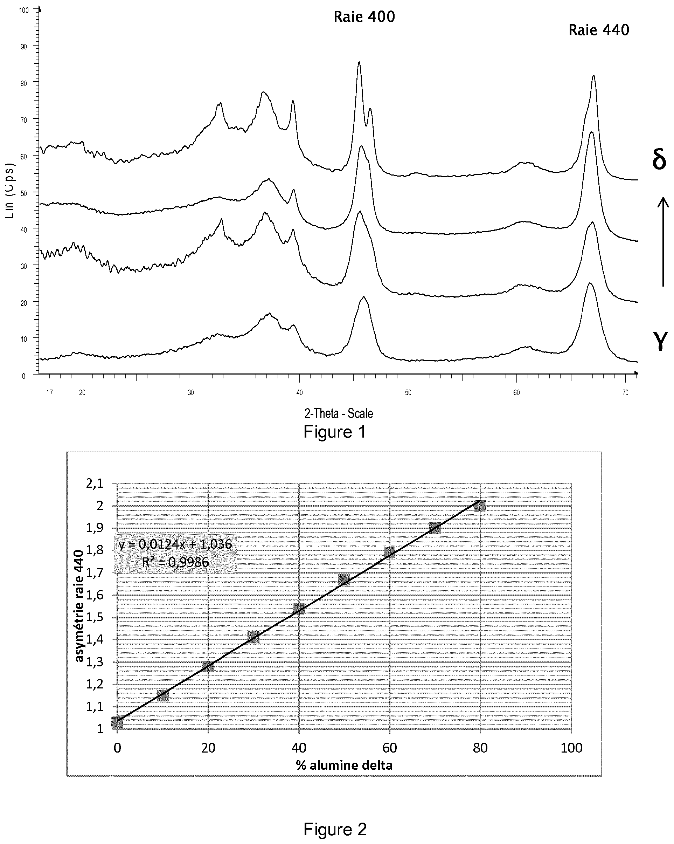

Le diagramme de l'alumine delta se distingue de celui de l'alumine gamma par un affinement général des raies, des modifications d'intensités relatives et surtout par un dédoublement des deux raies 400 et 440 (figure 1). L'étude du profil de la raie 440 donne accès au rapport des deux dimensions a et c' (c"/3 soit environ 7.83Å). De manière générale les diffractogrammes mettant en évidence une alumine gamma « pure » ou une alumine delta « pure » tels que décrit ci-dessus sont des cas relativement rares et la décomposition de la boehmite et/ou la calcination d'une alumine gamma donnent naissance à un continuum de phases plus ou moins quadratiques, non répertoriées de manière formelle.

On observe assez distinctement un dédoublement des raies 400 et 440 de l'alumine gamma cubique. A partir des profils de ces raies, on estime la proportion relative des alumines gamma et delta.

Les conditions utilisées pour l'enregistrement des diffractogrammes des supports de la présente invention sont données dans le tableau ci-dessous :

| Diffractomètre | PANalytical X'Pert Pro™ |
|---|---|
| Configuration | Réflexion (géométrie Bragg-Brentano) |
| Source Rayons X | Cuivre ($\lambda_{K\alpha 1}$ = 1,5406 Å) |
| Puissance de travail | 35mA x 35KV |
| Paramètres d'acquisition | Plage angulaire (en°2θ) : 5 à 75° 2 θ |
| | Pas angulaire (en °): 0.05° |
| | Temps par pas (en s) : 700s |
| | Durée d'une acquisition : 2h15 |
| | Optiques : Fentes variables + monochromateur arrière |
| | Détecteur : X'célérator (mode scanning 2,122°) |
| Préparation des échantillons | broyage et compactage de la poudre dans un porte-échantillon « classique » |

Le massif 440 (centré sur une position de 67° 2θ) est utilisé, en l'assimilant à un profil unique mais asymétrique, pour quantifier la proportion des alumines $\gamma$ et $\delta$. Pour limiter les degrés de liberté de l'ajustement, une fonction de type pseudo-Voigt, avec un paramètre $\eta$ (qui définit dans cette fonction la proportion de gaussienne et de lorentzienne) fixé à une valeur de 0,5 est utilisée. Les deux demi profils sont ajustés séparément et le paramètre qui définit l'asymétrie est le rapport des deux demi largeurs à mi-hauteur.

$$A_{sym} = \frac{\text{demi largeur gauche}}{\text{demi largeur droite}}$$

La proportion relative d'alumine $\gamma$ et $\delta$ est ensuite établie grâce à la corrélation de la figure 2, qui relie l'asymétrie de la raie 440 avec la proportion d'alumine $\delta$.

Sur le diffractogramme, la présence éventuelle de raies caractéristiques d'autres alumines telles que les alumines $\theta$ et $\alpha$ peut être détectée. La quantification de leur proportion peut être effectuée par mesure d'aire des raies en utilisant pour la comparaison des échantillons purs de ces alumines disponibles au laboratoire de DRX. Ainsi, la quantification de la fraction d'alumine $\theta$ est faite à partir d'un échantillon pur d'alumine $\theta$ en choisissant des raies isolées d'alumine $\theta$ à différents angles (30-35°, 51°, 73° et 108°) et la quantification de la fraction d'alumine $\alpha$ est faite à partir d'un échantillon pur d'alumine $\alpha$ en choisissant des raies isolées d'alumine $\alpha$ à différents angles (25.55°, 43.4°, 52.55° et 57.50°).

La surface spécifique du support d'alumine gamma est comprise entre 60 m$^2$/g et 100 m$^2$/g. La surface spécifique est déterminée dans la présente invention par la méthode B.E.T selon la norme ASTM D3663, telle que décrite dans l'ouvrage Rouquerol F.; Rouquerol J.; Singh K. « Adsorption by Powders & Porous Solids: Principle, methodology and applications », Academic Press, 1999, par exemple au moyen d'un appareil modèle Autopore III™ de la marque Microméritics™.

Le volume poreux du support d'alumine est généralement compris entre 0,4 cm$^3$/g et 1,3 cm$^3$/g, de préférence

compris entre 0,6 cm³/g et 1,1 cm³/g. Le volume poreux total est mesuré par porosimétrie au mercure selon la norme ASTM D4284 avec un angle de mouillage de 140°, telle que décrite dans le même ouvrage.

Le solide poreux à base d'alumine utilisé comme support se présente avantageusement sous forme de poudre ou sous forme de billes, d'extrudés, de pastilles, ou d'agglomérats irréguliers et non sphériques dont la forme spécifique peut résulter d'une étape de concassage.

Le catalyseur selon l'invention comprend également une phase active formée d'au moins un métal du groupe VIB et d'au moins un métal du groupe VIII. La catalyseur selon l'invention peut optionnellement comprendre du phosphore.

La teneur totale en métal du groupe VIII est comprise entre 0,1 et 10% poids d'oxyde du métal du groupe VIII par rapport au poids total du catalyseur, de préférence comprise entre 0,6 et 8% poids, de préférence comprise entre 2 et 7%, de manière très préférée comprise entre 2 et 6% poids et de manière encore plus préférée comprise entre 3 et 6% poids d'oxyde du métal du groupe VIII par rapport au poids total du catalyseur.

La teneur en métal du groupe VIB est comprise entre 3 et 35% poids d'oxyde du métal du groupe VIB par rapport au poids total du catalyseur, de préférence comprise entre 5 et 30% poids, de préférence comprise entre 7 et 28% poids, de manière très préférée comprise entre 10 et 25% poids d'oxyde du métal du groupe VIB par rapport au poids total du catalyseur.

Lorsque le phosphore est présent, le catalyseur selon l'invention présente une teneur en phosphore généralement comprise entre 0,3 et 10% poids de $P_2O_5$ par rapport au poids total de catalyseur, de préférence entre 2 et 8% poids de $P_2O_5$ par rapport au poids total de catalyseur. Par exemple, le phosphore présent dans le catalyseur est combiné avec le métal du groupe VIB et éventuellement avec également le métal du groupe VIII sous la forme d'hétéropolyanions.

Le catalyseur d'hydrotraitement selon l'invention, sous forme oxyde se caractérise par une surface spécifique comprise entre 50 et 90 m²/g.

En outre, le catalyseur présente une densité en métal du groupe VIB, exprimée en nombre d'atomes dudit métal par unité de surface du catalyseur, qui est comprise entre 3 et 30 atomes de métal du groupe VIB par nm² de catalyseur, de manière préférée comprise entre 3 et 25 atomes de métal du groupe VIB par nm² de catalyseur et de manière très préférée comprise entre 3,5 et 20 atomes de métal du groupe VIB par nm² de catalyseur. De manière encore plus préférée, la densité en métal du groupe VIB, exprimée en nombre d'atomes dudit métal par unité de surface du catalyseur est comprise entre 4 et 15 atomes de métal du groupe VIB par nm² de catalyseur. La densité en métal du groupe VIB, exprimée en nombre d'atomes de métal du groupe VIB par unité de surface du catalyseur (nombre d'atomes de métal du groupe VIB par nm² de catalyseur) est calculée par exemple à partir de la relation suivante :

$$d\,(\text{métal du groupe VIB}) = \frac{(X \times N_A)}{(100 \times 10^{18} \times S \times M_M)}$$

avec :

- X = % poids de métal du groupe VIB;
- $N_A$ = Nombre d'Avogadro égal à $6,022.10^{23}$;
- S = Surface spécifique du catalyseur (m²/g), mesurée selon la norme ASTM D3663 ;
- $M_M$ = Masse molaire du métal du groupe VIB (par exemple 95,94 g/mol pour le molybdène).

A titre d'exemple, si le catalyseur contient 20% poids d'oxyde de molybdène $MoO_3$ (soit 13,33% poids de Mo) et a une surface spécifique de 100 m²/g, la densité d(Mo) est égale à :

$$d\,(\text{Mo}) = \frac{(13,33 \times N_A)}{(100 \times 10^{18} \times 100 \times 96)} = 8,3 \text{ atomes de Mo/nm}^2 \text{ de catalyseur}$$

Le rapport molaire métal du groupe VIII sur métal du groupe VIB du catalyseur est généralement compris entre 0,1 et 0,8, de préférence compris entre 0,2 et 0,6.

Par ailleurs, le rapport molaire phosphore/(métal du groupe VIB) est généralement compris entre 0,1 et 0,7, de préférence compris entre 0,2 et 0,6, lorsque le phosphore est présent.

Le métal du groupe VIB présent dans la phase active du catalyseur est préférentiellement choisi parmi le molybdène et le tungstène.

Le métal du groupe VIII présent dans la phase active du catalyseur est préférentiellement choisi parmi le cobalt, le nickel et le mélange de ces deux éléments.

La phase active du catalyseur est choisie de préférence dans le groupe formé par la combinaison des éléments nickel-molybdène, cobalt-molybdène et nickel-cobalt-molybdène et de manière très préférée la phase active est constituée de cobalt et de molybdène.

**Procédé de préparation**

Le catalyseur selon l'invention peut être préparé selon tout mode de préparation connu de l'homme de l'art.

Selon un deuxième aspect de l'invention, l'invention porte sur un procédé de préparation du catalyseur selon l'invention mettant en œuvre une étape de traitement thermique d'un précurseur d'alumine de façon à obtenir un support d'alumine ayant une teneur en alumine gamma comprise entre 60% et 95% poids par rapport au poids du support, ledit support ayant une surface spécifique comprise entre 60 et 100 m$^2$/g.

Plus particulièrement, l'invention se rapporte également à un procédé de préparation du catalyseur d'hydrotraitement selon l'invention comprenant les étapes suivantes :

a) on effectue un traitement thermique à une température inférieure ou égale à 770°C d'un précurseur d'alumine de façon à obtenir un support ayant une teneur en alumine gamma comprise entre 60% et 95% poids par rapport au poids du support, ledit support ayant une surface spécifique comprise entre 60 et 100 m$^2$/g,

b) on met en contact au moins un composant d'un métal du groupe VIB, au moins un composant d'un métal du groupe VIII, et optionnellement du phosphore avec ledit support, de manière à obtenir un précurseur de catalyseur ;

c) on sèche ledit précurseur de catalyseur issu de l'étape b) à une température inférieure à 200°C.

Le précurseur d'alumine utilisé dans l'étape a) de préparation du catalyseur peut être obtenu selon différents modes de réalisation.

Selon un mode, le précurseur d'alumine utilisé dans l'étape a) de préparation du catalyseur peut être obtenu à partir de sels d'aluminium tels que le chlorure d'aluminium, le nitrate d'aluminium, le sulfate d'aluminium ou l'aluminate de sodium. La préparation du précurseur d'alumine implique alors une réaction de précipitation entre un ou plusieurs sels d'aluminium et optionnellement un ou plusieurs acides (par exemple l'acide nitrique, l'acide sulfurique, l'acide chlorhydrique, ...) ou une ou plusieurs bases (par exemple la soude, la potasse, l'ammoniaque, ...). Selon un des modes, la suspension obtenue à l'étape de précipitation est soumise directement à un traitement thermique en phase liquide, avec une température comprise entre 80°C et 300°C et une durée comprise entre 30 minutes et 2 semaines. Optionnellement un ou plusieurs acides et une ou plusieurs bases peuvent être ajoutés à la suspension avant le traitement thermique. Selon un autre mode, la suspension obtenue à l'étape de précipitation est soumise à une étape de séparation solide-liquide et éventuellement à des lavages. La fraction solide est alors remise en suspension dans un solvant et soumise à un traitement thermique en phase liquide, avec une température comprise entre 80°C et 300°C et une durée comprise entre 30 minutes et 2 semaines. Optionnellement un ou plusieurs acides et une ou plusieurs bases peuvent être ajoutés à la fraction solide remise en suspension avant le traitement thermique. A l'issue de l'étape de traitement thermique, des étapes de séparation solide-liquide et/ou de séchage (par exemple par atomisation) et/ou de mise en forme (par exemple par granulation, malaxage-extrusion, oil-drop, pastillage...) permet(tent) d'obtenir le précurseur d'alumine. Des exemples de préparation du précurseur d'alumine selon ce mode préféré peuvent être trouvés dans T. HE et al. Materials Let. 62 (2008) 17-17, 2939-2942 ou dans D. Yida et al. Ceramics Inter. 36 (2010) 1773-1777.

Selon un autre mode particulier de l'invention, le précurseur d'alumine utilisé selon la présente invention peut être obtenu à partir d'alcoholates d'aluminium tels que Al(O-Et)$_3$, Al(O-$i$Pr)$_3$, Al(O-$sec$Bu)$_3$, Al(O-$n$Bu)$_3$, Al(O-R)$_3$ avec R une chaîne alkyle linéaire contenant entre 6 et 18 atomes de carbone. La préparation du précurseur d'alumine implique alors une réaction d'hydrolyse d'un ou plusieurs alcoholates d'aluminium. Selon un des modes de l'invention, le milieu obtenu à l'étape d'hydrolyse est soumis directement à un traitement thermique en phase liquide, avec une température comprise entre 80°C et 300°C et une durée comprise entre 30 minutes et 2 semaines. Optionnellement un ou plusieurs acides et une ou plusieurs bases peuvent être ajoutés au milieu obtenu à l'étape d'hydrolyse avant le traitement thermique. Selon un autre mode de l'invention, le milieu obtenu à l'étape d'hydrolyse est soumis à une étape de séparation solide-liquide (et éventuellement à des lavages) puis la fraction solide est remise en suspension et soumise à un traitement thermique en phase liquide, avec une température comprise entre 80°C et 300°C et une durée comprise entre 30 minutes et 2 semaines. Optionnellement un ou plusieurs acides et une ou plusieurs bases peuvent être ajoutés à la fraction solide remise en suspension avant le traitement thermique. Selon un autre mode, le milieu obtenu à l'étape d'hydrolyse est soumis à une étape de séparation d'une phase liquide organique et d'une suspension aqueuse, puis la suspension aqueuse est soumise à un traitement thermique en phase liquide, avec une température comprise entre 80°C et 300°C et une durée comprise entre 30 minutes et 2 semaines. Optionnellement un ou plusieurs acides et une ou plusieurs bases peuvent être ajoutés à la suspension aqueuse avant le traitement thermique. Selon un autre mode, le milieu obtenu à l'étape d'hydrolyse est soumis à une étape d'évaporation du solvant organique, puis la fraction aqueuse est soumise à un traitement thermique en phase liquide, avec une température comprise entre 80°C et 300°C et une durée comprise entre 30 minutes et 2 semaines. Optionnellement un ou plusieurs acides et une ou plusieurs bases peuvent être ajoutés à la fraction aqueuse avant le traitement thermique. A l'issue de l'étape de traitement thermique, des étapes de séparation solide-liquide et/ou de séchage (par exemple par atomisation) et/ou de mise en forme (par exemple par granulation, malaxage-extrusion, oil-drop, pastillage...) permet(tent) d'obtenir le précurseur d'alumine. Des exemples de préparation du précurseur d'alumine selon ce mode préféré peuvent être trouvés dans A. Meyer et al. US 5,055,019 ou dans K. Noweck et al. US 8,414,854.

Selon un autre mode particulier de l'invention, le précurseur d'alumine peut être obtenu à partir d'une poudre composée de boehmite, de gibbsite, de bayerite, de diaspore, d'alumine chi, d'alumine kappa, d'alumine eta, d'alumine gamma, d'alumine delta ou d'un mélange de ces différents oxydes. La préparation du précurseur d'alumine implique alors la remise en suspension dans l'eau de cette poudre puis une étape de traitement thermique à une température comprise entre 80°C et 300°C et pendant une durée comprise entre 30 minutes et 2 semaines. Optionnellement un ou plusieurs acides et une ou plusieurs bases peuvent être ajoutés à la suspension aqueuse avant le traitement thermique. A l'issue de l'étape de traitement thermique, des étapes de séparation solide-liquide et/ou de séchage (par exemple par atomisation) et/ou de mise en forme (par exemple par granulation, malaxage-extrusion, oil-drop, pastillage...) permet(tent) d'obtenir le précurseur d'alumine. Des exemples de préparation du précurseur d'alumine selon ce mode préféré peuvent être trouvés dans J.-C. Li et al. App. Surface Sc. 253 (2006) 766-770 ou dans L. Guangci et al. App. Catal. A 437-438 (2012) 79-80.

Selon un autre mode particulier de l'invention, le précurseur d'alumine peut être obtenu à partir d'objets de taille millimétrique (définis comme des objets présentant au moins une dimension supérieure à 0,5 mm) sous la forme de billes, d'extrudés ou de pastilles. Ces solides peuvent être composés de boehmite, de gibbsite, de bayerite, de diaspore, d'alumine chi, d'alumine kappa, d'alumine eta, d'alumine gamma, d'alumine delta ou d'un mélange de ces différents oxydes. La préparation du précurseur d'alumine implique alors une étape d'autoclavage des objets de taille millimétrique à une température comprise entre 80°C et 300°C et une durée comprise entre 30 minutes et 2 semaines. Le terme autoclavage désigne ici le traitement sous pression de vapeur saturante ou sous une pression partielle de vapeur d'eau au moins égale à 70% de la pression de vapeur saturante correspondant à la température de traitement. Optionnellement, les objets de taille millimétrique peuvent être imprégnées avec de l'eau ou des solutions aqueuses acides ou basiques avant l'étape d'autoclavage. Cette imprégnation, avant l'étape d'autoclavage, peut être effectuée à sec ou par immersion des objets de taille millimétrique dans une solution aqueuse acide ou basique. Par imprégnation à sec, on entend une mise en contact des objets de taille millimétrique avec un volume de solution inférieur ou égal à leur volume de reprise en eau. De préférence, l'imprégnation est réalisée à sec. Des exemples de préparation du précurseur d'alumine selon ce mode préféré peuvent être trouvés dans A.A. Lamberov et al. Russ. J. Appl. Chem. 87 (2014) 6, 676-683 ou A. Stanislaus et al. J. Mol. Catal. A 181 (2002) 33-39 ou J.L. Le Loarer et al. FR2823193

D'une manière générale et pour tous les modes décrits ci-dessus, les étapes de traitement thermique ou d'autoclavage sont généralement réalisées à une température comprise entre 80°C et 300°C, de préférence comprise entre 120 et 250°C. Les étapes de traitement thermique ou d'autoclavage sont généralement réalisées pendant une durée comprise entre 30 minutes et 2 semaines, de préférence comprise entre 1 h et 48 h.

De manière préférée, les acides ajoutés avant l'étape de traitement thermique ou imprégnés sur le support avant l'étape d'autoclavage sont choisis parmi les acides nitrique, chlorhydrique, sulfurique, perchlorique, phosphorique, formique ou acétique. De manière préférée, les bases ajoutées avant l'étape de traitement thermique ou imprégnées sur le support avant l'étape d'autoclavage sont choisies parmi la soude, la potasse, l'ammoniaque, l'hydroxyde de tétraéthylammonium et la triéthylamine. Selon un mode de réalisation préféré, le précurseur d'alumine obtenu comprend un précurseur du type oxy(hydroxyde) d'aluminium (AlO(OH)) - également dénommé boehmite. De préférence, le précurseur d'alumine contient au moins 50% poids de boehmite AlOOH par rapport au poids total du précurseur d'alumine. De manière particulièrement préférée, le précurseur d'alumine consiste en de la boehmite.

## Etape a) Traitement thermique

Le précurseur d'alumine est éventuellement séché avant de subir le traitement thermique. Par exemple le séchage est effectué à une température comprise entre 100 et 200°C.

Le précurseur d'alumine séché subit ensuite une étape de traitement thermique à une température inférieure ou égale à 770°C qui permet de lui conférer des propriétés physiques répondant à l'application envisagée. Plus particulièrement, le précurseur d'alumine ainsi obtenu est ensuite soumis à un traitement thermique à une température inférieure ou égale à 770°C, de préférence comprise entre 500°C et 770 °C, et de manière particulièrement préférée comprise entre 550°C et 750°C, de façon à obtenir un support ayant une teneur en alumine gamma comprise entre 60% et 95% poids par rapport au poids du support, ledit support ayant une surface spécifique comprise entre 60 et 100 m$^2$/g.

De manière préférée, le support est préparé par traitement thermique à une température inférieure ou égale à 770°C, et de préférence comprise entre 500°C et 770°C, et de manière particulièrement préférée comprise entre 550°C et 750°C, d'un précurseur d'alumine contenant au moins 50% poids de boehmite AlOOH par rapport au poids total du précurseur d'alumine.

De manière préférée, le traitement thermique est réalisé pendant une durée comprise entre 1 et 8 heures sous air. Optionnellement l'air peut contenir une teneur en eau généralement comprise entre 0 et 50% poids.

A l'issue du traitement thermique de l'étape a) du procédé de préparation du catalyseur selon l'invention, on obtient un support d'alumine ayant une teneur en alumine gamma comprise entre 60% et 95% poids par rapport au poids du support, ledit support ayant une surface spécifique comprise entre 60 et 100 m$^2$/g.

Etape b) Introduction de la phase active

Selon l'étape b) du procédé de préparation du catalyseur selon l'invention, on met en contact au moins un composant d'un métal du groupe VIB, au moins un composant d'un métal du groupe VIII, et optionnellement du phosphore avec le support, de manière à obtenir un précurseur de catalyseur.

L'étape b) de mise en contact du support comprend plusieurs modes de mise en œuvre.

Selon un premier mode de mise en œuvre de l'étape b) du procédé de préparation du catalyseur, on procède au dépôt desdits composants des métaux du groupe VIB, du groupe VIII et optionnellement du phosphore sur ledit support, par une ou plusieurs étapes de co-imprégnations, c'est-à-dire que lesdits composants des métaux du groupe VIB, du groupe VIII et optionnellement du phosphore sont introduits simultanément dans ledit support. La ou les étapes de co-imprégnation est (sont) effectuée(s) préférentiellement par imprégnation à sec ou par imprégnation en excès de solution. Lorsque ce premier mode comprend la mise en œuvre de plusieurs étapes de co-imprégnation, chaque étape de co-imprégnation est de préférence suivie d'une étape de séchage intermédiaire généralement à une température inférieure à 200°C, avantageusement comprise entre 50 et 180°C, de préférence entre 60 et 150°C, de manière très préférée entre 75 et 140°C.

Selon un mode de réalisation préféré par co-imprégnation, la solution d'imprégnation est de préférence une solution aqueuse. De préférence, la solution aqueuse d'imprégnation lorsqu'elle contient du cobalt, du molybdène et du phosphore est préparée dans des conditions de pH favorisant la formation d'hétéropolyanions en solution. Par exemple le pH d'une telle solution aqueuse est compris entre 1 et 5. Selon un deuxième mode de mise en œuvre de l'étape b) du procédé de préparation du catalyseur, le précurseur de catalyseur est préparé en procédant aux dépôts successifs et dans un ordre indifférent d'un composant d'un métal du groupe VIB, d'un composant d'un métal du groupe VIII et optionnellement du phosphore sur ledit support. Les dépôts peuvent être réalisés par imprégnation à sec, par imprégnation en excès ou encore par dépôt-précipitation selon des méthodes bien connues de l'Homme du métier. Dans ce second mode de réalisation, le dépôt des composants des métaux des groupes VIB et VIII et optionnellement du phosphore peut être effectué par plusieurs imprégnations avec une étape de séchage intermédiaire entre deux imprégnations successives généralement à une température inférieure à 200°C, avantageusement comprise entre 50 et 180°C, de préférence entre 60 et 150°C, de manière très préférée entre 75 et 140°C.

Quel que soit le mode de dépôt des métaux et du phosphore optionnel mis en œuvre, le solvant qui entre dans la composition des solutions d'imprégnation est choisi de manière à solubiliser les précurseurs métalliques de la phase active, telle que l'eau ou un solvant organique (par exemple un alcool).

A titre d'exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique ($H_3PMo_{12}O_{40}$), et leurs sels, et éventuellement l'acide silicomolybdique ($H_4SiMo_{12}O_{40}$) et ses sels. Les sources de molybdène peuvent être également tout hétéropolycomposé de type Keggin, Keggin lacunaire, Keggin substitué, Dawson, Anderson, Strandberg, par exemple. On utilise de préférence le trioxyde de molybdène et les hétéropolycomposés de type Keggin, Keggin lacunaire, Keggin substitué et Strandberg.

Les précurseurs de tungstène qui peuvent être utilisés sont également bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique et leurs sels, et éventuellement l'acide silicotungstique ($H_4SiW_{12}O_{40}$) et ses sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué.

Les précurseurs de cobalt qui peuvent être utilisés sont avantageusement choisis parmi les oxydes, les hydroxydes, les hydroxycarbonates, les carbonates et les nitrates, par exemple. L'hydroxyde de cobalt et le carbonate de cobalt sont utilisés de manière préférée.

Les précurseurs de nickel qui peuvent être utilisés sont avantageusement choisis parmi les oxydes, les hydroxydes, les hydroxycarbonates, les carbonates et les nitrates, par exemple. L'hydroxyde de nickel et l'hydroxycarbonate de nickel sont utilisés de manière préférée.

Lorsque le phosphore est présent, le phosphore peut avantageusement être introduit dans le catalyseur à divers stades de sa préparation et de diverses manières. Le phosphore peut être introduit lors de la mise en forme dudit support d'alumine, ou de préférence après cette mise en forme. Il peut par exemple être introduit juste avant ou juste après la peptisation de la matrice choisie, telle que par exemple et de préférence l'oxyhydroxyde d'aluminium (boehmite) précurseur de l'alumine. Il peut également être avantageusement introduit seul ou en mélange avec l'un au moins des métaux du groupe VIB et VIII. Le phosphore est de préférence introduit en mélange avec les précurseurs des métaux du groupe VIB et du groupe VIII, en totalité ou en partie sur le support d'alumine mis en forme, par une imprégnation à sec dudit support d'alumine à l'aide d'une solution contenant les précurseurs des métaux et le précurseur du phosphore. La source de phosphore préférée est l'acide orthophosphorique $H_3PO_4$, mais ses sels et esters comme les phosphates d'ammonium ou leurs mélanges conviennent également. Le phosphore peut également être introduit en même temps que le(s) élément(s) du groupe VIB sous la forme, par exemple, d'hétéropolyanions de Keggin, Keggin lacunaire, Keggin substitué ou de type Strandberg.

Etape c) Séchage

A l'issue de ou des étapes d'imprégnation des métaux du groupe VIII, du groupe VIB et optionnellement du phosphore, le précurseur du catalyseur est soumis à une étape c) de séchage effectuée par toute technique connue de l'homme du métier. Elle est avantageusement effectuée à pression atmosphérique ou à pression réduite. De manière préférée, cette étape est réalisée à pression atmosphérique. Cette étape c) est effectuée à une température inférieure à 200°C, de préférence comprise entre 50 et 180°C, de préférence comprise entre 60°C et 150°C et de manière très préférée comprise entre 75°C et 140°C.

L'étape c) est avantageusement effectuée en lit traversé en utilisant de l'air ou tout autre gaz chaud. De manière préférée, lorsque le séchage est effectué en lit traversé, le gaz utilisé est soit l'air, soit un gaz inerte comme l'argon ou l'azote. De manière très préférée, le séchage est réalisé en lit traversé en présence d'air.

De préférence, cette étape de séchage a une durée comprise entre 30 minutes et 4 heures, et de préférence comprise entre 1 heure et 3 heures.

A l'issue de l'étape c) du procédé selon l'invention, on obtient un catalyseur séché qui peut être utilisé comme catalyseur d'hydrotraitement après une phase d'activation (étape de sulfuration).

Selon une variante, le catalyseur séché peut être soumis à une étape d) de calcination ultérieure, par exemple sous air, à une température supérieure ou égale à 200°C. La calcination est généralement effectuée à une température inférieure ou égale à 600°C, et de préférence comprise entre 200°C et 600°C, et de manière particulièrement préférée comprise entre 250°C et 500°C. La durée de calcination est généralement comprise entre 0,5 heure et 16 heures, de préférence entre 1 heure et 5 heures. Elle s'effectue généralement sous air. La calcination permet de transformer les précurseurs des métaux du groupe VIB et VIII en oxydes.

Avant son utilisation en tant que catalyseur d'hydrotraitement, il est avantageux de soumettre le catalyseur séché ou optionnellement calciné à une étape de sulfuration (phase d'activation). Cette phase d'activation s'effectue par les méthodes bien connues de l'homme de l'art, et avantageusement sous une atmosphère sulfo-réductrice en présence d'hydrogène et d'hydrogène sulfuré. L'hydrogène sulfuré peut être utilisé directement ou généré par un agent sulfure (tel que le diméthyldisulfure).

Selon un autre aspect de l'invention, le catalyseur d'hydrotraitement tel que décrit plus haut comprend en outre un ou plusieurs composés organiques contenant de l'oxygène et/ou de l'azote connus pour leur rôle d'additifs. Un tel catalyseur est désigné par le terme "catalyseur additivé" dans la suite de la description. Le composé organique présent dans le catalyseur contient plus de 2 atomes de carbone et au moins un atome d'oxygène et/ou d'azote.

Le composé organique contenant de l'oxygène peut être l'un ou plusieurs choisis parmi les composés comportant une ou plusieurs fonctions chimiques choisies parmi une fonction carboxylique, alcool, éther, aldéhyde, cétone, ester ou carbonate. A titre d'exemple, le composé organique contenant de l'oxygène peut être l'un ou plusieurs choisis dans le groupe constitué par l'éthylèneglycol, le diéthylèneglycol, le triéthylèneglycol, un polyéthylèneglycol (avec un poids moléculaire compris entre 200 et 1500 g/mol), le propylèneglycol, le 2-butoxyéthanol, 2-(2-butoxyéthoxy)éthanol, 2-(2-méthoxyéthoxy)éthanol, le triéthylèneglycoldiméthyléther, le glycérol, l'acétophénone, la 2,4-pentanedione, la pentanone, l'acide acétique, l'acide maléique, l'acide malique, l'acide malonique, l'acide oxalique, l'acide gluconique, l'acide tartrique, l'acide citrique, l'acide γ-cétovalérique, un succinate de dialkyle C1-C4, l'acétoacétate de méthyle, l'acétoacétate d'éthyle, le 3-oxobutanoate de 2-méthoxyéthyle, le 3-oxobutanoate de 2-méthacryloyloxyéthyle, le dibenzofurane, un éther couronne, l'acide orthophtalique, le glucose, la γ-valérolactone, la 2-acétylbutyrolactone et le carbonate de propylène.

Le composé organique contenant de l'azote peut être l'un ou plusieurs choisis parmi les composés comportant une ou plusieurs fonctions chimiques choisies parmi une fonction amine ou nitrile. A titre d'exemple, le composé organique contenant de l'azote peut être l'un ou plusieurs choisis dans le groupe constitué par l'éthylènediamine, la diéthylènetriamine, l'hexaméthylènediamine, la triéthylènetétramine, la tétraéthylènepentamine, la pentaéthylènehexamine, l'acétonitrile, l'octylamine, la guanidine ou un carbazole.

Le composé organique contenant de l'oxygène et de l'azote peut être l'un ou plusieurs choisis parmi les composés comportant une ou plusieurs fonctions chimiques choisies parmi une fonction acide carboxylique, alcool, éther, aldéhyde, cétone, ester, carbonate, amine, nitrile, imide, amide, urée ou oxime. A titre d'exemple, le composé organique contenant de l'oxygène et de l'azote peut être l'un ou plusieurs choisis dans le groupe constitué par l'acide 1,2-cyclohexanediaminetétraacétique, la monoéthanolamine (MEA), la N-méthylpyrrolidone, le diméthylformamide, l'acide éthylènediaminetétraacétique (EDTA), l'alanine, la glycine, l'acide nitrilotriacétique (NTA), l'acide N-(2-hydroxyéthyl)éthylènediamine-N,N',N'-triacétique (HEDTA), l'acide diéthylène-triaminepentaacétique (DTPA), la tétraméthylurée, l'acide glutamique, le diméthylglyoxime, la bicine, la tricine, ou encore un lactame.

De préférence, le composé organique contient de l'oxygène, de manière préférée il est choisi parmi la γ-valérolactone, un succinate de dialkyle C1-C4, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide γ-cétovalérique, le diméthylformamide, la N-méthylpyrrolidone, le carbonate de propylène, le 3-oxobutanoate de 2-méthoxyéthyle, le 3-oxobutanoate de 2-méthacryloyloxyéthyle, la bicine, ou la tricine.

Le rapport molaire de composé(s) organique(s) contenant de l'oxygène et/ou de l'azote par élément(s) du groupe VIB engagé sur le précurseur de catalyseur additivé est généralement compris entre 0,05 à 9 mol/mol, de préférence compris entre 0,1 à 8 mol/mol, de manière préférée compris entre 0,2 et 7 mol/mol avant séchage de l'étape ii).

Le composé organique contenant de l'oxygène et/ou de l'azote peut être introduit selon plusieurs modes de mise en œuvre durant le procédé de préparation.

Selon un premier mode de mise en œuvre, lesdits composants des métaux du groupe VIB et du groupe VIII, le composé organique et optionnellement le phosphore sont introduits simultanément dans ledit support. Ce premier mode de réalisation comprend la mise en œuvre d'une ou plusieurs étapes de co-imprégnation, chaque étape de co-imprégnation est de préférence suivie d'une étape de séchage intermédiaire généralement à une température inférieure à 200°C, avantageusement comprise entre 50 et 180°C, de préférence comprise entre 60 et 150°C, de manière très préférée comprise entre 75 et 140°C.

Selon un deuxième mode de mise en œuvre du procédé de préparation du catalyseur additivé, on met en contact au moins un composé organique contenant de l'oxygène et/ou de l'azote avec au moins un composant comprenant au moins un métal du groupe VIII, au moins un composant comprenant un métal du groupe VIB, optionnellement le phosphore et le support. Ce deuxième mode de mise en œuvre est une préparation dite par « post-imprégnation du composé organique ». La préparation du précurseur catalytique comprenant au moins un métal du groupe VIII, au moins un métal du groupe VIB, optionnellement le phosphore, et le support est effectuée selon les étapes b) d'introduction de la phase active et l'étape c) de séchage et optionnellement l'étape d) de calcination décrites plus haut. Le(s)dit(s) composé(s) organique(s) peut(vent) ensuite avantageusement être déposé(s) en une ou plusieurs étapes soit par imprégnation en excès, soit par imprégnation à sec, soit par tout autre moyen connu de l'homme du métier. De préférence l'introduction du composé organique est réalisé par une seule étape d'imprégnation, et de manière particulièrement préférée par une seul étape d'imprégnation à sec.

Après introduction du composé organique, le précurseur de catalyseur additivé, après éventuellement une étape de maturation, est soumis à une étape de séchage à une température inférieure à 200°C. L'étape de séchage est effectuée telle que décrite plus haut.

Lorsque le catalyseur comprend un composé organique, il n'est de préférence pas soumis à une étape de calcination à une température supérieure ou égale à 200°C après introduction du composé organique.

Selon un autre mode de réalisation alternatif, le procédé de préparation du catalyseur additivé peut combiner la co-imprégnation d'un composé organique et la post-imprégnation d'un composé organique qui peut être identique ou différent de celui utilisé pour la co-imprégnation. Dans ce cas, on introduit un composé organique contenant de l'oxygène et/ou de l'azote par co-imprégnation avec les composants des métaux du groupe VIB et VIII et optionnellement le phosphore sur le support, on sèche à une température inférieure à 200°C, on introduit le ou un autre composé organique contenant de l'oxygène et/ou de l'azote sur le précurseur catalytique séché, et on sèche une deuxième fois à une température inférieure à 200°C. Les conditions opératoires décrites ci-avant sont bien entendu applicables dans le cadre de ce mode de réalisation.

Avant son utilisation, il est avantageux d'activer le catalyseur additivé. Cette phase d'activation correspond à une sulfuration qui s'effectue par les méthodes bien connues de l'homme de l'art, et avantageusement sous une atmosphère sulfo-réductrice en présence d'hydrogène et d'hydrogène sulfuré.

Le catalyseur additivé obtenu est donc avantageusement soumis à une étape de sulfuration, sans étape de calcination intermédiaire. Ledit catalyseur additivé est avantageusement sulfuré de manière ex situ ou in situ. On peut utiliser les mêmes agents sulfurants que ceux décrits pour le catalyseur non-additivé selon l'invention.

**Procédé d'hydrotraitement**

L'invention se rapporte également à un procédé d'hydrotraitement d'une coupe essence. En particulier le procédé est une hydrodésulfuration d'une coupe d'hydrocarbures ayant un intervalle de distillation compris entre 30 et 260°C. De manière très préférée, la coupe essence est une coupe essence oléfinique issue par exemple d'une unité de craquage catalytique (Fluid Catalytic Cracking selon la terminologie anglo-saxonne).

Le procédé d'hydrodésulfuration selon l'invention permet de transformer les composés organo-soufrés de la charge d'hydrocarbure en sulfure d'hydrogène ($H_2S$) tout en limitant autant que possible l'hydrogénation des oléfines présentes dans ladite charge.

Le procédé d'hydrotraitement consiste à mettre en contact la coupe essence avec le catalyseur selon l'invention et de l'hydrogène dans les conditions suivantes:

- une température comprise entre 200 et 400°C, de préférence comprise entre 230 et 330°C ;
- à une pression totale comprise entre 1 et 3 MPa, de préférence comprise entre 1,5 et 2,5 MPa ;
- une Vitesse Volumique Horaire (VVH), définie comme étant le débit volumique de charge rapporté au volume de catalyseur, comprise entre 1 et 10 $h^{-1}$, de préférence comprise entre 2 et 6 $h^{-1}$ ;
- un rapport volumique hydrogène/charge essence compris entre 100 et 600 Nl/l, de préférence compris entre 200 et 400 Nl/l.

Le procédé d'hydrodésulfuration catalytique peut être réalisé dans un ou plusieurs réacteurs en série du type lit fixe ou du type lit bouillonnant. Si le procédé est mis en œuvre au moyen d'au moins deux réacteurs en série, il est possible de prévoir un dispositif d'élimination de l'$H_2S$ de l'effluent issu du premier réacteur d'hydrodésulfuration avant de traiter ledit effluent dans le deuxième réacteur d'hydrodésulfuration.

**Exemples**

Exemple 1 (comparatif) : Préparation de l'alumine S1 haute température présentant une surface spécifique BET inférieure à 100 $m^2/g$

Un support d'alumine est préparé par calcination directe d'un précurseur d'alumine (bœhmite) à haute température (1000°C). La surface BET du support S1 est déterminée à l'azote selon la norme ASTM D3663-03. L'identification des phases et de l'asymétrie de la raie [440] est réalisée par DRX selon la méthode décrite précédemment.

| Support | S1 |
|---|---|
| Phases détectées par DRX | Delta, Thêta et Alpha |
| Asymétrie de la raie [440] | 2,3 |
| $S_{BET}$ ($m^2/g$) | 79 |
| Teneur en alumine gamma (% pds) | 0 |

On observe des traces d'alumine alpha (de l'ordre de moins d'un pourcent poids d'alumine $\alpha$).

En utilisant la méthode telle que décrite dans la description de l'invention, la quantité d'alumine $\theta$ est estimée à partir d'un échantillon pur d'alumine $\theta$ disponible au labo de DRX et en choisissant les raies isolées d'alumine $\theta$ aux angles (30-35°, 51°, 73° et 108°). La teneur relative en alumine thêta dans cet échantillon est de 50% pds. L'asymétrie de la raie [440] indique l'absence d'alumine gamma. Le support est donc composé de 50% pds d'alumine thêta et de 50% pds d'alumine delta.

Exemple 2 (comparatif) : Préparation de l'alumine S2 basse température présentant une surface spécifique BET supérieure à 100 $m^2/g$

Un support d'alumine est préparé par calcination directe d'un précurseur d'alumine (bœhmite) à basse température (540°C). La surface BET du support S2 est déterminée à l'azote selon la norme ASTM D3663-03. L'analyse DRX ne fait pas apparaître de phases $\theta$ et $\alpha$. L'asymétrie de la raie [440] est 1,25. Cet échantillon est donc composé à 82% pds d'alumine $\gamma$.

| Support | S2 |
|---|---|
| $S_{BET}$ ($m^2/g$) | 264 |
| Teneur en alumine gamma (%pds) | 82 |

Exemple 3 (conforme) : Préparation de l'alumine S3 basse température présentant une surface spécifique BET inférieure à 100 m$^2$/g

Un support d'alumine est préparé par imprégnation à sec d'extrudés d'alumine gamma avec 1% d'acide acétique, suivie d'autoclavage à 180°C pendant 8 heures, puis d'une calcination à basse température (700°C). La surface BET du support S3 est déterminée à l'azote selon la norme ASTM D3663-03. L'analyse DRX ne fait pas apparaître de phases θ et α. L'asymétrie de la raie [440] est 1,36. Cet échantillon est donc composé à 74% pds d'alumine γ.

| Support | S3 |
|---|---|
| $S_{BET}$ (m$^2$/g) | 79 |
| Teneur en alumine gamma (% pds) | 74 |

Exemple 4 (conforme) : Préparation de l'alumine S4 basse température présentant une surface spécifique BET à 120 m$^2$/g

Un support d'alumine est préparé par traitement thermique à 225°C pendant 6 h d'une poudre de boehmite à 10% poids en suspension dans l'eau. Le solide est ensuite séparé par filtration puis soumis à une calcination à basse température (600°C). La surface BET du support S4 est déterminée à l'azote selon la norme ASTM D3663-03. L'analyse DRX ne fait pas apparaître de phases θ et α. L'asymétrie de la raie [440] est 1,20. Cet échantillon est donc composé à 87% d'alumine γ.

| Support | S4 |
|---|---|
| $S_{BET}$ (m$^2$/g) | 120 |
| Teneur en alumine gamma (% pds) | 87 |

Exemple 5 (conforme) : Préparation de l'alumine S5 basse température présentant une surface spécifique BET inférieure à 100 m$^2$/g

Une solution de tri-n-hexanolate d'aluminium est hydrolysée à 90°C par addition d'eau. L'hexanol est ensuite éliminé par distillation azéotropique. Le résidu est chauffé à 110°C pendant 24 h dans un réacteur. Le solide est ensuite séparé par filtration puis soumis à une calcination à basse température (700°C).
La surface BET du support S5 est déterminée à l'azote selon la norme ASTM D3663-03. L'analyse DRX ne fait pas apparaître de phases θ et α. L'asymétrie de la raie [440] est 1,26. Cet échantillon est donc composé à 82% pds d'alumine γ.

| Support | S5 |
|---|---|
| $S_{BET}$ (m$^2$/g) | 95 |
| Teneur en alumine gamma (% pds) | 82 |

Exemple 6 (conforme) : Préparation de l'alumine S6 basse température présentant une surface spécifique BET inférieure à 100 m$^2$/g

Une solution de soude est additionnée à une solution de chlorure d'aluminium dans l'eau. Le milieu réactionnel est chauffé à 200°C pendant 24 h. Le solide est ensuite séparé par filtration puis soumis à une calcination à basse température (560°C).
La surface BET du support S6 est déterminée à l'azote selon la norme ASTM D3663-03. L'analyse DRX ne fait pas apparaître de phases θ et α. L'asymétrie de la raie [440] est 1,10. Cet échantillon est donc composé à 95% pds d'alumine γ.

| Support | S6 |
|---|---|
| $S_{BET}$ (m$^2$/g) | 97 |
| Teneur en alumine gamma (% pds) | 95 |

Exemple 7 (comparatif) Synthèse d'un catalyseur CoMo/alumine A1 de faible densité surfacique en molydène

Le catalyseur A1 est obtenu par imprégnation à sec d'une solution aqueuse préparée à partir d'oxyde de molybdène, d'hydroxyde de cobalt, d'acide phosphorique et d'acide citrique, le volume de ladite solution contenant les précurseurs de cobalt, de molybdène et de phosphore et l'additif organique acide citrique étant rigoureusement égal au volume poreux de la masse de support d'alumine S1. Les concentrations en précurseurs dans la solution aqueuse et en additif organique sont ajustées de manière à déposer sur le support d'alumine les teneurs pondérales en Co, Mo et P afin d'obtenir une densité surfacique en molybdène fixée à 4,5 atomes de molybdène par $nm^2$ de catalyseur, des rapports atomiques Co/Mo et P/Mo respectivement égaux à 0,4 et 0,55 et un rapport molaire additif/Mo égal à 1. Après une étape de maturation pendant 12 heures, le solide est séché pendant 12 heures à 120°C.

| Catalyseur | A1 |
|---|---|
| Support | S1 |
| $S_{BET}$ ($m^2$/g - catalyseur) | 70 |
| Asymétrie de la raie 440 | 2,35 |
| CoO (%pds) | 1,6 |
| $MoO_3$ (%pds) | 7,7 |
| $P_2O_5$ (%pds) | 2,1 |

Exemple 8 (comparatif) Synthèse d'un catalyseur CoMo/alumine A2 de forte densité surfacique en molydène

Le catalyseur A2 est obtenu par imprégnation à sec d'une solution aqueuse préparée à partir d'oxyde de molybdène, d'hydroxyde de cobalt, d'acide phosphorique et d'acide citrique, le volume de ladite solution contenant les précurseurs de cobalt, de molybdène et de phosphore et l'additif organique acide citrique étant rigoureusement égal au volume poreux de la masse de support d'alumine S2. Les concentrations en précurseurs dans la solution aqueuse et en additif organique sont ajustées de manière à déposer sur le support d'alumine les teneurs pondérales en Co, Mo et P afin d'obtenir une densité surfacique en molybdène fixée à 5,2 atomes de molybdène par $nm^2$ de catalyseur, des rapports atomiques Co/Mo et P/Mo respectivement égaux à 0,4 et 0,55 et un rapport molaire additif/Mo égal à 1. Après une étape de maturation pendant 12 heures, le solide est séché pendant 12 heures à 120°C.

| Catalyseur | A2 |
|---|---|
| Support | S2 |
| $S_{BET}$ ($m^2$/g - catalyseur) | 178 |
| Asymétrie de la raie 440 | 1,29 |
| CoO (%pds) | 4,5 |
| $MoO_3$ (%pds) | 22,0 |
| $P_2O_5$ (%pds) | 6,0 |

Exemple 9 : Synthèse du catalyseur CoMo/alumine A3 (selon l'invention)

Le catalyseur A3 est obtenu par imprégnation à sec d'une solution aqueuse préparée à partir d'oxyde de molybdène, d'hydroxyde de cobalt, d'acide phosphorique et d'acide citrique, le volume de ladite solution contenant les précurseurs de cobalt, de molybdène et de phosphore et l'additif organique acide citrique étant rigoureusement égal au volume poreux de la masse de support d'alumine S3. Les concentrations en précurseurs dans la solution aqueuse et en additif organique sont ajustées de manière à déposer sur le support d'alumine les teneurs pondérales en Co, Mo et P afin d'obtenir une densité surfacique en molybdène fixée à 7 atomes de molybdène par $nm^2$ de catalyseur, des rapports atomiques Co/Mo et P/Mo respectivement égaux à 0,4 et 0,55 et un rapport molaire additif/Mo égal à 1. Après une étape de maturation pendant 12 heures, le solide est séché pendant 12 heures à 120°C.

| Catalyseur | A3 |
|---|---|
| Support | S3 |
| $S_{BET}$ (m²/g - catalyseur) | 66 |
| Asymétrie de la raie 440 | 1,40 |
| CoO (%pds) | 2,3 |
| MoO$_3$ (%pds) | 11,1 |
| P$_2$O$_5$ (%pds) | 3,0 |

Exemple 10 : Synthèse du catalyseur CoMo/alumine A4 sans additif (selon l'invention)

Le catalyseur A4 est obtenu par imprégnation à sec d'une solution aqueuse préparée à partir d'oxyde de molybdène, d'hydroxyde de cobalt et d'acide phosphorique, le volume de ladite solution contenant les précurseurs de cobalt, de molybdène et de phosphore étant rigoureusement égal au volume poreux de la masse de support d'alumine S5. Les concentrations en précurseurs dans la solution sont ajustées de manière à déposer sur le support d'alumine les teneurs pondérales en Co, Mo et P afin d'obtenir une densité surfacique en molybdène fixée à 4,5 atomes de molybdène par nm² de catalyseur, des rapports atomiques Co/Mo et P/Mo respectivement égaux à 0,4 et 0,32. Après une étape de maturation pendant 12 heures, le solide est séché pendant 12 heures à 120°C puis calciné pendant 4h à 450°C.

| Catalyseur | A4 |
|---|---|
| Support | S5 |
| $S_{BET}$ (m²/g - catalyseur) | 83 |
| Asymétrie de la raie 440 | 1,26 |
| CoO (%pds) | 1,9 |
| MoO$_3$ (%pds) | 9,0 |
| P$_2$O$_5$ (%pds) | 1,4 |

Exemple 11 : Évaluation des catalyseurs A1, A2, A3 et A4

Une charge modèle représentative d'une essence de craquage catalytique (FCC) contenant 10 % poids de 2,3-diméthylbut-2-ène et 0,33 % poids de 3-méthylthiophène (soit 1000 ppm pds de soufre dans la charge) est utilisée pour l'évaluation des performances catalytiques des différents catalyseurs. Le solvant utilisé est l'heptane.

La réaction d'hydrodésulfuration (HDS) est opérée dans un réacteur à lit fixe traversé sous une pression totale de 1,5 MPa, 210°C, VVH = 6 h$^{-1}$ (VVH = débit volumique de charge/volume de catalyseur) en présence de 4 mL de catalyseur. Au préalable à la réaction d'HDS, le catalyseur est sulfuré *in-situ* à 450°C pendant 2 heures sous flux d'H$_2$ contenant 15%mol d'H$_2$S à pression atmosphérique.

Chacun des catalyseurs sont placés successivement dans ledit réacteur. Des échantillons sont prélevés à différents intervalles de temps et sont analysés par chromatographie en phase gazeuse de façon à observer la disparition des réactifs et la formation des produits.

Les performances catalytiques des catalyseurs sont évaluées à partir de l'activité catalytique et de la sélectivité.

L'activité HDS est exprimée à partir de la constante de vitesse pour la réaction d'HDS du 3-méthylthiophène (kHDS), normalisée par volume de catalyseur introduit, en supposant une cinétique d'ordre 1 par rapport au composé soufré.

L'activité HydO est exprimée à partir de la constante de vitesse pour la réaction d'hydrogénation de l'oléfine (HydO), à savoir dans le cas présent pour la réaction d'hydrogénation du 2,3-diméthylbut-2-ène, normalisée par volume de catalyseur introduit, en supposant une cinétique d'ordre 1 par rapport à l'oléfine.

La sélectivité du catalyseur est exprimée en rapport normalisé des constantes de vitesse kHDS/kHydO, Le rapport kHDS/kHydO sera d'autant plus élevé que le catalyseur sera plus sélectif, signifiant une hydrogénation limitée du 2,3-diméthylbut-2-ène. Une augmentation du rapport kHDS/kHydO est donc favorable sur la qualité de l'essence obtenue à l'issue de la réaction d'hydrodésulfuration, dès lors que l'hydrogénation des oléfines ayant été limitée, la perte d'indice d'octane de l'essence résultante est fortement minimisée.

L'activité HDS et la sélectivité des catalyseurs sont données dans le tableau suivant. Les valeurs sont normalisées en prenant le catalyseur A1 comme référence, c'est-à-dire que l'activité HDS et la sélectivité des catalyseurs A2, A3 et A4 sont comparées en relatif à celles du catalyseur A1 pour lequel l'activité HDS et la sélectivité sont fixées à 100. On observe que les catalyseurs selon l'invention montrent une augmentation de la sélectivité tout en maintenant l'activité.

Sélectivité et activité relatives des catalyseurs A1, A2 et A3.

| Catalyseurs | A1 (comp) | A2 (comp) | A3 (inv) | A4 (inv) |
|---|---|---|---|---|
| $S_{BET}$ (m$^2$/g de catalyseur) | 70 | 178 | 66 | 83 |
| Asymétrie de la raie 440 | 2,35 | 1,29 | 1,40 | 1,26 |
| Teneur en alumine gamma (% pds) | 0 | 82 | 74 | 82 |
| Activité HDS relative | 100 | 230 | 100 | 103 |
| Sélectivité relative | 100 | 78 | 142 | 114 |

## Revendications

1. Catalyseur d'hydrotraitement comprenant au moins un métal du groupe VIB, au moins un métal du groupe VIII et un support d'alumine contenant de l'alumine gamma et une alumine choisie parmi l'alumine delta, thêta et/ou alpha, ledit support d'alumine ayant une teneur en alumine gamma comprise entre 60% et 95% poids par rapport au poids du support, ledit support ayant une surface spécifique comprise entre 60 et 100 m$^2$/g, la teneur en métal du groupe VIB est comprise entre 3 et 35% poids d'oxyde dudit métal du groupe VIB par rapport au poids total du catalyseur et la teneur en métal du groupe VIII est comprise entre 0,1 et 10% poids d'oxyde dudit métal du groupe VIII par rapport au poids total du catalyseur, ledit catalyseur ayant une surface spécifique comprise entre 50 et 90 m$^2$/g.

2. Catalyseur selon la revendication 1, dans lequel le rapport molaire (métal du groupe VIII)/(métal du groupe VIB) est compris entre 0,1 et 0,8.

3. Catalyseur selon l'une des revendications précédentes, lequel contient en outre du phosphore, la teneur en phosphore étant comprise entre 0,3 et 10% poids exprimé en $P_2O_5$ par rapport au poids total du catalyseur et le rapport molaire phosphore/(métal du groupe VIB) dans le catalyseur est compris entre 0,1 et 0,7.

4. Catalyseur selon l'une des revendications précédentes, dans lequel la densité en métal du groupe VIB, exprimée en nombre d'atomes de métal du groupe VIB par unité de surface du catalyseur est comprise entre 3 et 30 atomes de métal du groupe VIB par nm$^2$ de catalyseur.

5. Catalyseur selon l'une des revendications précédentes, dans lequel le métal du groupe VIB est choisi parmi le tungstène et le molybdène et le métal du groupe VIII est choisi parmi le nickel et le cobalt.

6. Catalyseur selon l'une des revendications précédentes, comprenant en outre au moins un composé organique contenant de l'oxygène et/ou de l'azote.

7. Catalyseur selon la revendication 6, dans lequel le composé organique est choisi parmi un acide carboxylique, un alcool, un aldéhyde, un ester, une amine, un acide carboxylique aminé, un alcool aminé, un nitrile et un amide.

8. Catalyseur selon la revendication 7, dans lequel le composé organique est choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide γ-cétovalérique, le diméthylformamide, la N-méthylpyrrolidone, le carbonate de propylène, le 3-oxobutanoate de 2-méthoxyéthyle, le 3-oxobutanoate de 2-méthacryloyloxyéthyle, la bicine, ou la tricine.

9. Catalyseur selon l'une des revendications précédentes, **caractérisé en ce qu'**il est sulfuré.

10. Procédé d'hydrodésulfuration d'une coupe essence dans lequel on met en contact ladite coupe essence, de l'hydrogène et un catalyseur selon l'une des revendications 1 à 9, ledit catalyseur étant sulfuré et la mise en contact étant effectuée à :

• une température comprise entre 200 et 400°C ;
• une pression totale comprise entre 1 et 3 MPa ;
• une Vitesse Volumique Horaire, définie comme étant le débit volumique de charge rapporté au volume de catalyseur, comprise entre 1 et 10 h$^{-1}$ ;
• un rapport volumique hydrogène/charge essence compris entre 100 et 600 Nl/l.

11. Procédé selon la revendication 10, dans lequel l'essence est une essence issue d'une unité de craquage catalytique.

**Patentansprüche**

1. Hydrierbehandlungskatalysator, umfassend mindestens ein Metall der Gruppe VIB, mindestens ein Metall der Gruppe VIII und einen Aluminiumoxid-Träger, der gamma-Aluminiumoxid und ein aus delta-, theta- und/oder alpha-Aluminiumoxid ausgewähltes Aluminiumoxid enthält, wobei der Aluminiumoxid-Träger einen Gehalt an gamma-Aluminiumoxid zwischen 60 und 95 Gew.-%, bezogen auf das Gewicht des Trägers, aufweist, wobei der Träger eine spezifische Oberfläche zwischen 60 und 100 m$^2$/g aufweist, der Gehalt an Metall der Gruppe VIB zwischen 3 und 35 Gew.-% Oxid des Metalls der Gruppe VIB, bezogen auf das Gesamtgewicht des Katalysators, liegt und der Gehalt an Metall der Gruppe VIII zwischen 0,1 und 10 Gew.-% Oxid des Metalls der Gruppe VIII, bezogen auf das Gesamtgewicht des Katalysators, liegt, wobei der Katalysator eine spezifische Oberfläche zwischen 50 und 90 m$^2$/g aufweist.

2. Katalysator nach Anspruch 1, wobei das Molverhältnis (Metall der Gruppe VIII)/(Metall der Gruppe VIB) zwischen 0,1 und 0,8 liegt.

3. Katalysator nach einem der vorhergehenden Ansprüche, der außerdem Phosphor enthält, wobei der Gehalt an Phosphor zwischen 0,3 und 10 Gew.-%, ausgedrückt als P$_2$O$_5$, bezogen auf das Gesamtgewicht des Katalysators, liegt und das Molverhältnis Phosphor/(Metall der Gruppe VIB) in dem Katalysator zwischen 0,1 und 0,7 liegt.

4. Katalysator nach einem der vorhergehenden Ansprüche, wobei die Dichte von Metall der Gruppe VIB, ausgedrückt als Zahl der Atome des Metalls der Gruppe VIB pro Flächeneinheit des Katalysators, zwischen 3 und 30 Atomen von Metall der Gruppe VIB pro nm$^2$ Katalysator liegt.

5. Katalysator nach einem der vorhergehenden Ansprüche, wobei das Metall der Gruppe VIB aus Wolfram und Molybdän ausgewählt ist und das Metall der Gruppe VIII aus Nickel und Cobalt ausgewählt ist.

6. Katalysator nach einem der vorhergehenden Ansprüche, der außerdem mindestens eine Sauerstoff und/oder Stickstoff enthaltende organische Verbindung umfasst.

7. Katalysator nach Anspruch 6, wobei die organische Verbindung aus einer Carbonsäure, einem Alkohol, einem Aldehyd, einem Ester, einem Amin, einer Aminocarbonsäure, einem Aminoalkohol, einem Nitril und einem Amid ausgewählt ist.

8. Katalysator nach Anspruch 7, wobei die organische Verbindung aus γ-Valerolacton, 2-Acetylbutyrolacton, Triethylenglykol, Diethylenglykol, Ethylenglykol, Ethylendiamintetraessigsäure (EDTA), Maleinsäure, Malonsäure, Citronensäure, γ-Ketovaleriansäure, Dimethylformamid, N-Methylpyrrolidon, Propylencarbonat, 3-Oxobutansäure-2-methacryloyloxyethylester, Bicin oder Tricin ausgewählt ist.

9. Katalysator nach einem der vorhergehenden Ansprüche, **dadurch gekennzeichnet, dass** er geschwefelt ist.

10. Verfahren zur Hydrodesulfurierung eines Benzinschnitts, bei dem man den Benzinschnitt, Wasserstoff und einen Katalysator nach einem der Ansprüche 1 bis 9 in Kontakt bringt, wobei der Katalysator geschwefelt ist und das Inkontaktbringen bei

• einer Temperatur zwischen 200 und 400 °C,
• einem Gesamtdruck zwischen 1 und 3 MPa,
• einer Katalysatorbelastung, die als Volumenstrom des Einsatzstoffs bezogen auf das Katalysatorvolumen definiert ist, zwischen 1 und 10 h$^{-1}$,
• einem Wasserstoff/Benzin-Einsatzstoff-Verhältnis zwischen 100 und 600 Nl/l

durchgeführt wird.

11. Verfahren nach Anspruch 10, wobei es sich bei dem Benzin um ein Benzin aus einer Einheit zum katalytischen Cracken handelt.

**Claims**

1. Hydrotreating catalyst comprising at least one group VIB metal, at least one group VIII metal and an alumina support containing gamma alumina and an alumina chosen from delta, theta and/or alpha alumina, said alumina support having a gamma alumina content of between 60% and 95% by weight relative to the weight of the support, said support having a specific surface area of between 60 and 100 $m^2/g$, the group VIB metal content is between 3% and 35% by weight of oxide of said group VIB metal relative to the total weight of the catalyst, and the group VIII metal content is between 0.1% and 10% by weight of oxide of said group VIII metal relative to the total weight of the catalyst, said catalyst having a specific surface area of between 50 and 90 $m^2/g$.

2. Catalyst according to Claim 1, in which the (group VIII metal)/(group VIB metal) molar ratio is between 0.1 and 0.8.

3. Catalyst according to either of the preceding claims, which further contains phosphorus, the phosphorus content being between 0.3% and 10% by weight expressed as $P_2O_5$ relative to the total weight of the catalyst and the molar ratio of phosphorus/(group VIB metal) in the catalyst is between 0.1 and 0.7.

4. Catalyst according to one of the preceding claims, in which the density of group VIB metal, expressed as the number of atoms of group VIB metal per unit area of the catalyst is between 3 and 30 atoms of group VIB metal per $nm^2$ of catalyst.

5. Catalyst according to one of the preceding claims, in which the group VIB metal is chosen from tungsten and molybdenum and the group VIII metal is chosen from nickel and cobalt.

6. Catalyst according to one of the preceding claims, further comprising at least one organic compound containing oxygen and/or nitrogen.

7. Catalyst according to Claim 6, in which the organic compound is chosen from a carboxylic acid, an alcohol, an aldehyde, an ester, an amine, an amino carboxylic acid, an amino alcohol, a nitrile and an amide.

8. Catalyst according to Claim 7, in which the organic compound is chosen from $\gamma$-valerolactone, 2-acetylbutyrolactone, triethylene glycol, diethylene glycol, ethylene glycol, ethylenediaminetetraacetic acid (EDTA), maleic acid, malonic acid, citric acid, $\gamma$-ketovaleric acid, dimethylformamide, N-methylpyrrolidone, propylene carbonate, 2-methoxyethyl 3-oxobutanoate, 2-(methacryloyloxy)ethyl 3-oxobutanoate, bicine, or tricine.

9. Catalyst according to one of the preceding claims, **characterized in that** it is sulfided.

10. Process for the hydrodesulfurization of a gasoline cut in which said gasoline cut, hydrogen and a catalyst according to one of claims 1 to 9 are brought into contact, said catalyst being sulfided and the contacting being carried out at:

   • a temperature of between 200°C and 400°C;
   • a total pressure of between 1 and 3 MPa;
   • an hourly space velocity, defined as being the volume flow rate of feedstock relative to the volume of catalyst, of between 1 and 10 $h^{-1}$;
   • a hydrogen/gasoline feedstock ratio by volume of between 100 and 600 Nl/l.

11. Process according to Claim 10, in which the gasoline is a gasoline resulting from a catalytic cracking unit.

Figure 1

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009321320 A
- EP 1892039 A
- WO 2009111720 A
- FR 3023184
- EP 2816094 A1
- US 5300217 A
- US 5055019 A, A. Meyer
- US 8414854 B, K. Noweck
- FR 2823193, J.L. Le Loarer

**Littérature non-brevet citée dans la description**

- CRC Handbook of Chemistry and Physics. 2000
- **P. SOUZA SANTOS et al.** Standard Transition Aluminas. Electron Microscopy Studies. *Materials Research,* 2000, vol. 3 (4), 104-114
- **ROUQUEROL F. ; ROUQUEROL J. ; SINGH K.** Adsorption by Powders & Porous Solids: Principle, methodology and applications. Academic Press, 1999
- **T. HE et al.** *Materials Let.,* 2008, vol. 62, 17-17, 2939-2942
- **D. YIDA et al.** *Ceramics Inter.,* 2010, vol. 36, 1773-1777
- **J.-C. LI et al.** *App. Surface Sc.,* 2006, vol. 253, 766-770
- **L. GUANGCI et al.** *App. Catal. A,* 2012, vol. 437-438, 79-80
- **A.A. LAMBEROV et al.** *Russ. J. Appl. Chem.,* 2014, vol. 87 (6), 676-683
- **A. STANISLAUS et al.** *J. Mol. Catal. A,* 2002, vol. 181, 33-39